**Europäisches Patentamt**

**European Patent Office**

**Office européen des brevets**

(19)

(11) Veröffentlichungsnummer: **0 196 582**
**B1**

(12) ## EUROPÄISCHE PATENTSCHRIFT

(45) Veröffentlichungstag der Patentschrift:
**05.10.88**

(21) Anmeldenummer: **86103955.0**

(22) Anmeldetag: **22.03.86**

(51) Int. Cl.⁴: **B 65 G 1/06,** B 65 G 25/10

(54) **Palettenvorschub-Anlage.**

(30) Priorität: **29.03.85 CH 1382/85**

(43) Veröffentlichungstag der Anmeldung:
**08.10.86 Patentblatt 86/41**

(45) Bekanntmachung des Hinweises auf die Patenterteilung:
**05.10.88 Patentblatt 88/40**

(84) Benannte Vertragsstaaten:
**AT BE CH DE FR GB IT LI LU NL SE**

(56) Entgegenhaltungen:
**DE - A - 2 927 692**
**DE - A - 3 330 620**
**NL - C - 60 079**

(73) Patentinhaber: **Radlmair, Josef,
Sonnenwiesenstrasse 20, CH-8280 Kreuzlingen (CH)**

(72) Erfinder: **Radlmair, Josef, Sonnenwiesenstrasse 20,
CH-8280 Kreuzlingen (CH)**

(74) Vertreter: **Troesch, Hans Alfred, Dr. Ing. et al,
Walchestrasse 19, CH-8035 Zürich (CH)**

## Beschreibung

Die vorliegende Erfindung betrifft eine Palettenvorschub-Anlage.

Die bekannten Palettenvorschub-Anlagen weisen den Nachteil auf, dass, wenn die vorderste Palette, z. B. auf ihrem Rolluntersatz, in ihre Entladelage geschoben ist, ein weiteres Zubringen auf die Entladerampe von nachfolgenden Rolluntersätzen mit Paletten nicht mehr möglich ist, da die Betätigungsanlage nach dem Zuschieben des vordersten Rolluntersatzes zum Zuschieben der nachfolgenden Rolluntersätze blockiert wird. Dies ist dadurch bedingt, dass die sog. Vorschubknaggen fest mit der hin- und herschiebbaren Stange verbunden sind. Wenn daher der vorderste Rolluntersatz in seine Entladelage geschoben ist und die Stange von dieser weg in ihre Ausgangslage gebracht wird, kann sie sich beim Vorschieben des nächsten Rolluntersatzes nicht mehr frei bewegen. Sobald nämlich die dem Entladeende nächstgelegene Knagge am vordersten Rolluntersatz aufläuft und diesen weiterschieben möchte, verhindert dies ein Endanschlag und die Zuschiebebewegung des Knaggenträgers wird unterbrochen. Das Nachschieben weiterer Rolluntersätze zum Aufschliessen auf den vordersten wird dadurch so lange verunmöglicht, als die Palette am Entladeende nicht entfernt wird. Dies bringt zeitliche Verzögerungen mit sich und erschwert ein freies Arbeiten der Aufgabestelle (DE-A-2 927 692). Dies bedeutet mithin aber in der Praxis auch den sehr wesentlichen Nachteil bezüglich eines kontinuierlichen Entladevorganges.

Es ist ferner ein Norm-Palettenfördersystem für Längs- und Querförderung bekannt geworden, bei welchem die Norm-Paletten auf in sich geteilten antriebslosen Feinstrollenbahnen durch in der Teilrinne untergebrachte, versenkte Schnappnokken befördert werden. Dabei weisen die Schnappnocken nur eine Mitnahmestrecke von Palettenlänge plus Palettenabstand auf, wobei sie eine Rückzugsbewegung in gleicher Länge ausführen und anschliessend wieder bereit sind, eine nachfolgende Palette in gleicher Weise zu fördern. Ein derartiges Fördersystem kann grundsätzlich ein kontinuierliches Beladen und Entladen von Paletten sicherstellen, ist aber in seinem Aufbau kompliziert, daher teuer und störanfällig, da es für jede zu fördernde Palette einen Schnappnocken mit eigenem Kettenantrieb und entsprechender Steuerung braucht (DE-OS 33 30 620).

Zum Stande der Technik gehört ferner eine Vorrichtung zum schrittweisen Fortbewegen von Büchsenmäntelzuschnitten, d. h. quadratischen oder rechteckigen Blechen, von einer Bearbeitungsstelle zur nächsten mittels hin- und hergehender Greifer oder Finger. Diese Vorrichtung bezweckt, ein Beschädigen der Blechzuschnitte beim Rückwärtshub der Greifer oder Finger durch Anbringen einer Rolle an deren vorderem Ende zu verhüten. Das Werkstück läuft dann beim Rückwärtshub über die Rolle und nicht über feste Teile des Greifers oder Fingers.

Um zu verhindern, dass von der normalen Länge etwas abweichende Bleche Störungen im regelmässigen Transport verursachen können, wird die Klinke mit einem Langloch auf einem Drehstift in der hin- und hergehenden Schiene schwenkbar gelagert. Dadurch wird es möglich, dass beim Fortbewegen von etwas zu langen Blechen entgegen dem Druck einer Feder die Klinke im Langloch bei stillstehendem Drehstift in der Schiene nach hinten ausweichen kann, sobald das Blech in der Endlage gegen einen die Lage des Bleches bestimmenden Anschlag gelangt. Dadurch wird eine Deformation des Bleches vermieden. Diese Massnahme des Anbringens eines Langloches, um geringe Abweichungen in der Masshaltigkeit der zu transportierenden Blechzuschnitte zu ermöglichen, steht jedoch in keinem Zusammenhang mit der kontinuierlichen bzw. taktweisen Förderung der Blechzuschnitte. Diese Blechzuschnitt-Förderung erfolgt in der Grossfabrikation mit vollständig automatisierten Fördermitteln vom Ausgangsgrossblech bis zur fertigen Dose. Solche Anlagen sind völlig anders zu konzipieren als eine diskontinuierliche individuelle Palettenentlade- und -ladeanlage. Sie weisen wenig Gemeinsames auf. Diese Erfindung aus dem Jahre 1947 in automatischen Büchsenherstellungsanlagen – denn nur für derartige Anlagen ist diese Erfindung sinnvoll – konnte die der vorliegenden Erfindung zugrundeliegende Aufgabe weder nahelegen noch lösen (holl. Patent 60 079). Diese bestehenden Nachteile an Palettenvorschub-Anlagen trachtet die vorliegende Erfindung auszuschalten.

In diesem Sinne zeichnet sich die erfindungsgemässe Palettenvorschub-Anlage durch den Inhalt des Anspruchs 1 aus.

Ein Ausführungsbeispiel des Erfindungsgegenstandes wird anschliessend anhand einer Zeichnung erläutert. Es zeigen:

Fig. 1 die Seitenansicht einer Palettenvorschub-Anlage;

Fig. 2 die Palettenvorschub-Anlage gemäss Fig. 1 in Aufsicht;

Fig. 3 einen Ausschnitt aus der Palettenvorschub-Anlage gemäss Fig. 1, mit der Darstellung einer einzelnen Knagge;

Fig. 4 eine Ansicht in Bewegungsrichtung einer auf ihrem Träger montierten Knagge.

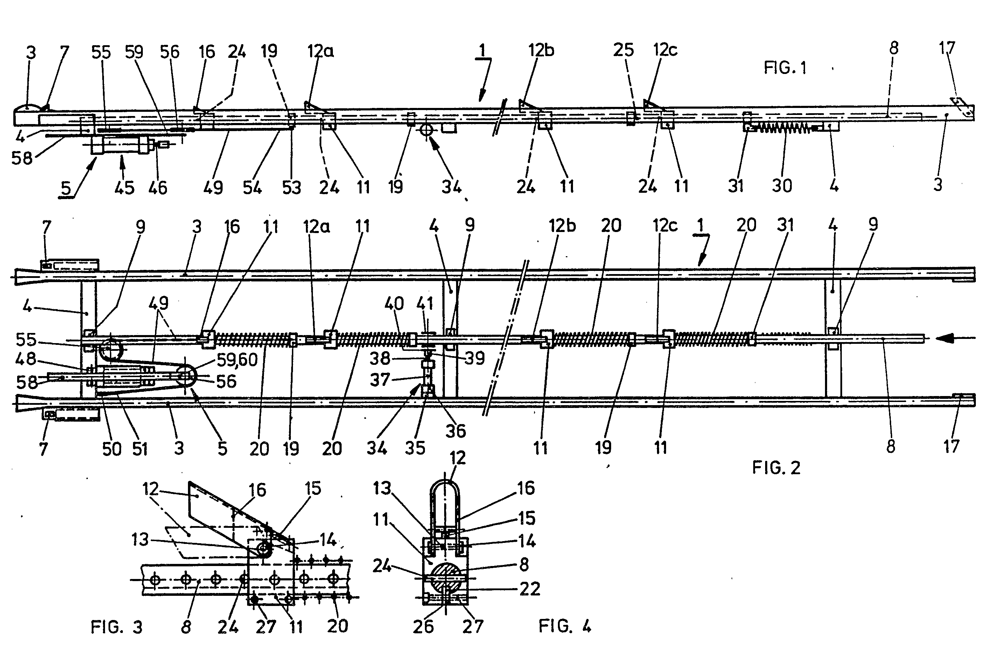

Die Fig. 1 und 2 zeigen eine Palettenvorschub-Anlage 1, welche seitlich durch zwei parallele Geleise 3 begrenzt ist. Diese sind durch drei Traversen 4 miteinander verbunden. An der vordersten Traverse 4 ist ein Antrieb 5 zum Betätigen der Anlage vorgesehen. Als vordere Begrenzung der Bewegungsmöglichkeit der Rolluntersätze mit den Paletten kann beidseits der Geleise 3 je ein Endanschlag 7 montiert werden. Zwischen den beiden Geleisen 3 befindet sich eine rohrförmige Vortriebsstange 8, die mittels mehrerer, z. B. dreier Lagerböcke 9 auf den Traversen 4 längsverschiebbar gehalten wird. Auf diese Vortriebsstange 8 sind Knaggenträger 11 mit in diesen Knaggenträgern 11 schwenkbaren Bewegungsknaggen 12, 16 angeordnet. Die vorderste Knagge ist als Kurzknagge ausgebildet, während die anderen Knaggen 12a, b und c, wie Fig. 3 zeigt, länger sind. Die Kurzknagge 16 ist zum Angreifen an der Traverse des Rolluntersatzes vorgesehen, während die Langknaggen 12a, b und c jeweils zum Erfassen einer der drei Traversen der auf den Rolluntersätzen angeordneten Paletten dienen. Es wäre natürlich grundsätzlich auch möglich, alle Knaggen in der Kurzform auszuführen und sie an den Rolluntersätzen angreifen zu lassen oder entsprechend alle Knaggen als Langknaggen zu konzipieren.

Die Knaggen 12 und 16 sind in Schwenklagern 13 mit Hilfe von rechtwinklig zur Verschieberichtung angeordneten Bolzen 14 festgehalten. Knaggenfedern 15 sorgen dafür, dass die Normallage der Knaggen, wie Fig. 3 zeigt, in Stosslage aufgerichtet ist. Werden die Knaggen von links nach rechts bewegt, so werden diese beim Auftreffen auf ein in ihrer Bewegungsbahn liegendes Hindernis, z. B. die Querstrebe eines Rolluntersatzes unter Spannen der Knaggenfedern 15, wie strichpunktiert in Fig. 3 angedeutet, nach unten geklappt und damit unter Rolluntersätzen bzw. Paletten mühelos durchgeführt.

Auf der Vortriebsstange 8 sitzen zu den Knaggen zugeordnete Klemmringe 19, welche verschiebbare, aber normalerweise mit der Vortriebsstange 8 fest verbundene Auflager für Vorschubfedern 20 bilden, während die anderen Federenden der Vorschubfedern 20 an den Knaggenträgern 11 aufliegen. Am Ladeende des Geleises 3 sind zwei Rückhalteklinken 17 schwenkbar angeordnet.

Um die Knaggenträger 11 drehfest mit der Vortriebsstange 8 zu verbinden, ist diese mit einem Längsschlitz 22 versehen, in dem ein jedem Knaggenträger 11 zugeordneter, mittels Kupplungsbolzen 27 festgehaltener Führungskeil 26 läuft, wie dies Fig. 4 zeigt.

Da der Antrieb 5 am vordersten, der Kurzknagge 16 zugeordneten Klemmring 19, wie insbesondere Fig. 1 zeigt, angreift, dieser Klemmring 19 jedoch fest mit der Vortriebsstange 8 verbunden ist, bedarf es einer Rückholfeder 30, welche an einem an der Vortriebsstange 8 befestigten Federringhalter 31 sowie an der zugehörenden Traverse 4 befestigt ist, um die Vortriebsstange 8 in ihre Ausgangslage zurückzuführen.

Wird ein ungehindertes Hin- und Herbewegen der Rolluntersätze in beiden Richtungen, z. B. bei Einschieblagern, auf den Geleisen 3 verlangt, ist eine Umlegeeinrichtung 34 anzuordnen, welche einerseits an einem Halter 35 am einen Geleise 3 und andernends schwenkbar an einer Schwenkmuffe 41 befestigt ist, welche mit der Vortriebsstange 8 schwenkverbunden, aber längsverschiebbar ist. Am Halter 35 ist über ein Umlegelager 36 ein Zylinder/Kolbenaggregat 37 befestigt, dessen Kolbenstange 38 über einen Kopf 39 und ein Umlegelager 40 mit der Schwenkmuffe 41 verbunden ist. Durch Ausfahren des Kolbens bzw. der Kolbenstange 38 aus dem Zylinder des Aggregates 37 erfolgt ein Umlegen der Vortriebsstange 8 um ihre Längsachse und damit ein Umlegen aller Knaggenträger 11 mit den zugehörenden Knaggen 12, 16 usw. aus der senkrechten Ebene ihrer Normallagen. Damit wird ein freies Zirkulieren der Rolluntersätze auf den Geleisen 3 in beiden Richtungen ermöglicht, da alle Knaggen aus ihrer gemeinsamen senkrechten Wirkungsebene in eine inaktive Lage umgelegt werden.

Zum Betätigen der Vorschubanlage 1 bzw. zum Vorschieben von Rolluntersätzen, die mit Paletten zum Entladeende beladen sind, dient ein Antriebszylinder/Kolbenaggregat 45 oder ein sonstwie angetriebener Stössel, von welchem die Kolbenstange 46 in Fig. 1 bezeichnet ist. Dieses Aggregat 45 ist auf einer an der Endtraverse 4 befestigten Halterung 48 gelagert. Ein Kabel 49 überträgt die Bewegung des Zylinders des Aggregates 45 auf den Klemmring 19 zur Kurzknagge 16. Das eine Kabelende 51 wird von einer an der Traverse 4 befestigten Haltelasche 50 gehalten, während das andere Kabelende 54 an einer Haltenase 53 des Klemmringes 19 zur Kurzknagge 16 befestigt ist. Das Kabel 49 ist über zwei Umlenkrollen 55 und 56 geführt, von welchen die Umlenkrolle 56 an einem in Richtung der Kolbenstange 46 verschiebbaren Rollenträger 58 an dem als Haltegabel 59 ausgebildeten Ende befestigt ist. Die Haltegabel 59 ist über eine Verbindungslasche 60 mit dem Rollenträger 58 verbunden. Beim Aus- bzw. Einfahren der Kolbenstange 46 des Aggregates 45 wird über den Klemmring 19 (Fig. 1) die Vortriebsstange 8 von rechts nach links bewegt bzw. die Vortriebsstange 8 unter dem Zug der Rückholfeder 30 von links nach rechts geschoben.

Der grösste Abstand zwischen dem Knaggenträger 11 und dem zugeordneten Klemmring 19 wird durch den Ort des zugehörigen Haltestiftes 24 bestimmt. Dieser Ort ist so zu wählen, dass die Vorschubfeder 20 jeweils unter leichter Vorspannung steht. Ferner sind diese Einrichtungen 11, 19, 20 dort auf der Vortriebsstange 8 festzuhalten, wo sie in der anschliessend beschriebenen Art abstandsmässig zum gewünschten Einsatz kommen.

Die Funktionsweise einer derart konzipierten Palettenvorschub-Anlage ist die folgende:

Ein mit einer Palette beladener Rolluntersatz wird rechts auf die Geleise 3 geschoben. Nach dessen Einfahren verhindern die beiden Rückhalteklinken 17 ein Zurückfahren und Abgleiten von den Geleisen 3. Die beiden Klinken 17 können nötigenfalls von Hand in ihre Freigabestellung abgeschwenkt werden. Die Vortriebsstange 8 befindet sich in ihrer Ausgangslage, in welcher sie, wie die Fig. 1 und 2 zeigen, nach rechts geschoben ist. Der entsprechende Rollenuntersatz mit der Palette ist auf den Geleisen 3 zum Stillstand gekommen. Nun wird der Kolben des Antriebszylinder/Kolbenaggregates 45 ausgestossen und über das Kabel 49 der Klemmring 19 zur kurzen Knagge 16 mitsamt der Vortriebsstange 8 nach links bewegt. Der bei einer derartigen Bewegung zurückgelegte Weg der Vortriebsstange 8 beträgt normalerweise zwischen 20 und 40 cm.

Die Palette kann aber auch entgegengesetzt in den Kanal geschoben werden, wenn die Vortriebsstange 8 umgelegt ist, z. B. bei Einschieblagern.

Wenn durch Ausfahren der Kolbenstange 46 der Arbeitshub der Vortriebsstange 8 beginnt, wird im Verlauf von deren Bewegung eine der Knaggen 12 bzw. die Knagge 16 am eingeschobenen Palett bzw. dem Rolluntersatz zum Anliegen kommen. Die Vortriebsstange 8 führt ihre Bewegung nach links fort und mit ihr der zugeordnete Klemmring 19. Dabei spannt er die Vorschubfeder 20, womit sich die Schubkraft auf die Knagge und von dieser auf die Palette bzw. den Rolluntersatz erhöht. Bei dieser Bewegung trennt sich der Haltestift 24 vom Knaggenträger 11. Der Haltestift 24 bewegt sich mit der Vortriebsstange 8 nach links, während die Knagge am Rolluntersatz oder direkt an der Palette verbleibt.

Wenn die Federkraft der Vorschubfeder 20 grösser wird als der Rollwiderstand des Rolluntersatzes auf dem Geleise 3, wird dieser Rolluntersatz so lange verschoben, bis sich die Vortriebsstange 8 in ihrer ausgefahrenen Endlage befindet.

Nun wird die Kolbenstange 46 eingefahren und dadurch der Klemmring 19 und mit ihm die Vortriebsstange 8 vom Zug des Kabels 49 befreit. Die Vortriebsstange 8 bewegt sich daher unter dem Zug der Rückholfeder 30 nach rechts. Die Knagge bleibt an der Palette bzw. dem Rolluntersatz am Anschlag, bis der Haltestift 24, von links kommend, den Knaggenträger 11 mit der Knagge mitnimmt und damit die Knagge von dem Rolluntersatz bzw. der Palette absetzt.

Die Vortriebsstange 8 befindet sich wieder in ihrer Ausgangslage. Die Federn 20 und 30 sind allesamt maximal entspannt. Der Hub des Antriebes 5 und die distanzmässige Anordnung der Einrichtungen 11, 19, 20 sind so eingestellt, dass mit einem oder mehreren Arbeitshüben der Vortriebsstange 8 der ersteingeführte Rolluntersatz an den beiden Endanschlägen 7 ansteht. Dabei liegt der Haltestift 24 vor der am Rolluntersatz anstehenden Kurzknagge 16. Die Vorschubfeder 20 ist maximal gespannt.

Beim Zurückgehen der Vortriebsstange 8 nach rechts bleibt die Kurzknagge 16 bei sich entspannender Vorschubfeder 20 am Rolluntersatz. Dabei wird am Ende der Rückzugbewegung die Knagge mit mehr oder weniger grosser Anpresskraft am Rolluntersatz bleiben. Grundsätzlich wäre es auch möglich, dass der Träger 11 der Kurzknagge 16 vom Stift 24 erfasst wird und sich bei weiterer Bewegung der Vortriebsstange 8 nach rechts vom Rolluntersatz absetzt. Dies ist eine Frage der Distanzeinstellungen. Die Hub- und Distanzverhältnisse können so gewählt werden, dass die jeweiligen Knaggen mit vorbestimmter Kraft der Vorschubfeder 20 am Rolluntersatz bzw. der Palette bei nach rechts bewegter Vortriebsstange 8 verbleiben oder von ihnen abgesetzt werden.

Auf diese Weise ist es möglich, auf dem Geleise entsprechend der Anzahl der Knaggen hintereinander eine Reihe sich berührender Rolluntersätze mit Paletten anzuordnen und die Reihe nach Entnahme des vordersten Rolluntersatzes nachzuschieben. Sobald ein Rolluntersatz in seine Endlage geschoben ist, verbleibt demnach normalerweise seine Knagge ruhend an ihm anliegend, während sich die Vortriebsstange 8 mit den freien Knaggen zum Verschieben der neu ankommenden Rolluntersätze hin und her bewegt.

In der Ruhelage ist die Bewegung der Knaggenträger 11 bezüglich der Vortriebsstange 8 durch entsprechende Haltestifte 24, wie erläutert, begrenzt. Ferner können entsprechende Haltestifte 25 zusätzlich für eine formschlüssige Mitnahme der Klemmringe 19 bei der Bewegung der Vortriebsstange 8 von rechts nach links sorgen.

Bei den bisher bekannten Vorschubsystemen wurde diese Arbeitsweise dadurch verhindert, dass die Knaggen, auch als Schuborgane bezeichnet, mit der Vortriebsstange 8 lösbar fest verbunden waren, was ein müheloses, problemloses Aneinanderreihen von sich folgenden Rolluntersätzen ausschloss, rein schon aufgrund unmöglich einzuhaltender bzw. einzustellender Massgenauigkeiten von Knaggen, Vortriebsstange und deren Weglänge.

Die beschriebene Palettenvorschub-Anlage kann sich, im Gegensatz zu bekannten derartigen Anlagen, horizontal angeordneter Geleise ohne Gefälle bedienen, da die Knaggenträger kraftschlüssig mit der Vortriebsstange arbeiten. Dies bringt den grossen Vorteil, dass bei Einschieblagern die Lasten nicht aufwärts durch das Regalbedienungsgerät geschoben werden müssen, sondern nur die Radreibungsarbeit zu erbringen ist. Daher können für gegebene Verschiebungsgewichte die Schuborgane merklich kleiner ausgeführt werden, für den Einschub von Paletten, d. h. es können wesentlich längere Kanäle gefüllt werden.

Die erfindungsgemässe Anlage ist diesbezüglich sehr einfach, verblüffend einfach im Aufbau, anpassungsfähig und betriebssicher.

## Patentansprüche

1. Palettenvorschub-Anlage für Schienen-Rolluntersätze, welche zum Beladen mit Paletten vorgesehen sind, mit unter Federkraft (15) stehenden Vorschubknaggen (12, 16), die mit einer hin- und herschiebbaren Stange (8) wirkverbunden sind, und welche Knaggen, in Knaggenträgern (11) gelagert, um zur Verschieberichtung der Stange (8) rechtwinklig angeordnete Achsen (13) schwenkbar sind, wobei diese Federkraft (15) die Knaggen (12) in ihre Stosslage ausschwenkt, dadurch gekennzeichnet, dass die Knaggenträger (11) unter verstellbarer Vorschub-Federspannung (20) frei längsverschieblich auf der Stange (8) angeordnet sind, wobei die Vorschubknaggen (12, 16) unabhängig von dieser Vorschub-Federspannung (20) schwenkbar sind.

2. Anlage nach Anspruch 1, dadurch gekennzeichnet, dass die Knaggen (12) aus ihrer Wirkungslage nicht nur in Verschieberichtung abklapp-, sondern auch quer zur Verschieberichtung der Paletten aus der Arbeitslage umlegbar (34) sind, um die Rollenuntersätze oder die Paletten in beiden Richtungen frei bewegen zu können.

3. Anlage nach einem der Ansprüche 1 oder 2, gekennzeichnet durch Mitnehmer, z. B. Steckstifte (24), um die Knaggenträger (11) mit der dafür gelochten Stange (8) an einer gewählten Stelle vorübergehend formschlüssig zu verbinden.

4. Anlage nach einem der Ansprüche 1 bis 3, gekennzeichnet durch auf der Stange (8) längsverschiebbare Knaggenträger (11) und Klemmringe (19), zwischen welchen jeweils eine stets unter Spannung gehaltene Vorschubfeder (20) angeordnet ist.

5. Anlage nach einem der Ansprüche 1 bis 4, dadurch gekennzeichnet, dass die Stange (8) bezüglich aller Knaggenträger (11) mit ihren Knaggen (12, 16) in Verschieberichtung der Rolluntersätze entgegen den Vorschub-Federspannungen (20) bewegbar ist, derart, dass an jedem auf den Anlageschienen (3) fahrenden Rolluntersatz im Ruhezustand bei geschlossener Rolluntersatzreihe eine Knagge (12, 16) anliegt, während beim Vorschieben der Stange (8) mitsamt ihren restlichen, nicht anliegenden Knaggen (12, 16) die anliegenden Knaggen im wesentlichen bewegungslos an ihren Rolluntersätzen und/oder ihren Paletten verbleiben.

## Claims

1. Pallet displacement arrangement for rail/roller bases, which are provided with pallets for loading, with displacement catches (12, 16) under the force of a spring (15) which are connected actively to a rod (8) which can be pushed to and fro, and which catches, mounted in catch holders (11), can be pivoted about axes (13) arranged at right angles to the direction of displacement of the rod (8), said spring force (15) pivoting the catches (12) out into their impact position, characterised in that the catch holders (11) are arranged on the rod (8) under adjustable displacement spring tension (20) so as to be freely displaceable longitudinally, the displacement catches (12, 16) being able to pivot independently of said displacement spring tension (20).

2. Arrangement according to claim 1, characterised in that the catches (12) can not only be swung down from their active position in the direction of displacement but also can be moved (34) out of the operating position transverse to the direction of displacement of the pallets, in order to be able to move the roller bases or the pallets freely in both directions.

3. Arrangement according to one of claims 1 or 2, characterised by engaging means, e.g. insertion pins (24), to connect the catch holder (11) temporarily and in a form-locking manner to the rod (8), which has holes punched therein for this purpose, in a selected position.

4. Arrangement according to one of claims 1 to 3, characterised by catch holders (11) which can be displaced longitudinally on the rod (8) and clamping rings (19), between each of which a displacement spring (20) is arranged which is kept constantly under tension.

5. Arrangement according to one of claims 1 to 4, characterised in that the rod (8) can be moved relative to all the catch holders (11) with their catches (12, 16) in the direction of displacement of the roller bases against the displacement spring tensions (20) in such a way that a catch (12, 16) rests against each roller base running on the bearing rails (3) in the rest position with a closed set of roller bases, while on displacing the rod (8) forwards, with its other non-contacting catches (12, 16), the catches in contact remain substantially without movement against their roller bases and/ or their pallets.

## Revendications

1. Installation d'avancement de palettes pour des supports roulants sur rails qui sont destinés à être chargés de palettes, comportant des taquets d'avancement (12, 16) soumis à une force élastique (15) et reliés d'une manière active à une barre (8) déplaçable selon un mouvement de va-et-vient, ces taquets étant montés dans des porte-taquets (11) pour pouvoir pivoter autour d'axes (13) disposés perpendiculairement à la direction de déplacement de la barre (8), cette force élastique (15) faisant ainsi pivoter les taquets (12) dans leur position de butée, caractérisée en ce que les porte-taquets (11) sont disposés de manière à être librement déplaçables longitudinalement sur la barre (8) sous l'effet d'une tension élastique d'avancement réglable (20), les taquets d'avancement (12, 16) pouvant pivoter indépendamment de cette tension élastique d'avancement (20).

2. Installation selon la revendication 1, caractérisée en ce que les taquets (12) peuvent non seulement être rabattus depuis leur position active dans la direction de déplacement, mais également être basculés (34) à partir de leur position de travail, transversalement par rapport à la direction de déplacement des palettes, pour pouvoir déplacer librement les supports roulants ou les palettes dans les deux directions.

3. Installation selon la revendication 1 ou 2, caractérisée par des doigts d'entraînement, par exemple des tiges d'enfichage (24), permettant d'accoupler temporairement par une liaison mécanique, en un endroit choisi, les porte-taquets (11) avec la barre (8) perforée à cet effet.

4. Installation selon l'une des revendications 1 à 3, caractérisée par des porte-taquets (11) et des bagues de serrage (19) déplaçables longitudinalement sur la barre (8) et entre lesquels sont respectivement disposés des ressorts d'avancement (20) placés en permanence sous tension.

5. Installation selon l'une des revendications 1 à 4, caractérisée en ce que la barre (8) est déplaçable par rapport à tous les porte-taquets (11) munis de leurs taquets (12, 16), dans la direction de déplacement des supports roulants, à l'encontre des tensions élastiques d'avancement (20), de telle sorte qu'au repos, dans le cas d'une série complète de supports roulants, un taquet (12, 16) s'appuie contre chaque support roulant mobile sur les rails (3) de l'installation, tandis que lors de l'avancement de la barre (8), dont les autres taquets (12, 16) ne sont pas en position appuyée, les taquets appuyés restent sensiblement immobiles sur leurs supports roulants et/ou leurs palettes.

FIG. 1

FIG. 2

FIG. 3

FIG. 4